# EUROPÄISCHE PATENTANMELDUNG

(11) **EP 4 353 509 A1**
(43) Veröffentlichungstag der Anmeldung: **17.04.2024**
(21) Anmeldenummer: 23200318.6
(22) Anmeldetag: 28.09.2023
(51) Int. Cl.: B60K 7/00, B60G 3/14

(54) **DREHGESTELL UND TRANSPORTFAHRZEUG**

(30) Priorität: 12.10.2022 DE 102022210768
(71) Anmelder: Scheuerle Fahrzeugfabrik GmbH, 74629 Pfedelbach (DE)
(72) Erfinder: Braun, Lukas, 91595 Burgoberbach (DE); Kammerleitner, Ronny, 74629 Pfedelbach (DE); Schmalzbauer, Jens, 74639 Zweiflingen (DE)
(74) Vertreter: Ullrich & Naumann PartG mbB

(57) **Zusammenfassung**

Ein Drehgestell (100) umfassend eine Schwerlastpendelachse mit einem Achskörper (1), wobei der Achskörper (1) über ein Pendellager (2) mit einer Längsschwinge (3) koppelbar ist, wobei an einem ersten Ende (4) des Achskörpers (1) und an einem zweiten Ende (5) des Achskörpers (1) jeweils mindestens ein Rad (6) anordenbar sind, ist dadurch gekennzeichnet, dass mindestens ein Elektromotor (7) als direkter Antrieb für die Räder angeordnet ist. Des Weiteren ist ein Transportfahrzeug (200) angegeben.

## Beschreibung

Die Erfindung betrifft ein Drehgestell für ein Transportfahrzeug, insbesondere für ein selbstangetriebenes Transportfahrzeug (SPMT), umfassend eine Schwerlastpendelachse mit einem Achskörper, wobei der Achskörper über ein Pendellager mit einer Längsschwinge koppelbar ist, wobei an einem ersten Ende des Achskörpers und an einem zweiten Ende des Achskörpers jeweils mindestens ein Rad anordenbar sind.

Des Weiteren betrifft die Erfindung ein Transportfahrzeug, insbesondere ein Schwerlasttransportfahrzeug.

Drehgestelle und Transportfahrzeuge mit Drehgestellen sind seit Jahren aus der Praxis bekannt und werden zum Transport von schweren Lasten, beispielsweise Industrieanlagen, Schiffe, Schiffssektionen, Turbinen etc. verwendet. Insbesondere sind sog. selbstangetriebene Transportfahrzeuge ("self-propelled modular transporter" SPMT) bekannt geworden, welche den Transport von ausladenden und extrem schweren Lasten ermöglichen. Diese Transportfahrzeuge weisen üblicherweise hydrostatische Antriebe auf, die über eine zentrale Pumpeneinheit betrieben werden. Die zentrale Pumpeneinheit wird wiederum über Verbrennungsmotoren, Elektroantriebe oder Hybridantriebe betrieben. Hierzu sind die zentrale Pumpeneinheit und die hydrostatischen Antriebe mittels entsprechender Hydraulikleitungen verbunden. Des Weiteren ermöglichen es bekannte Schwerlastpendelachsen Bodenunebenheiten auszugleichen und die Nutzlast gleichmäßig auf mehrere Achsen zu verteilen, so dass schwere Lasten besonders straßenschonend transportierbar sind.

Entsprechende Transportfahrzeuge weisen insgesamt den Vorteil auf, dass ein sicherer Transport der schweren und ausladenden Lasten zuverlässig möglich ist und dass diese miteinander koppelbar ausgebildet sind, so dass eine Anpassung der Transportfahrzeuge an die Ladung gegeben ist. Ein Nachteil der bekannten Transportfahrzeuge bzw. der bekannten Drehgestelle besteht in dem hohen Energiebedarf.

Der vorliegenden Erfindung liegt die Aufgabe zugrunde, ein Drehgestell der eingangs genannten Art derart auszugestalten und weiterzubilden, dass mit konstruktiv einfachen Mitteln ein energieeffizienter Antrieb von mit der Schwerlastpendelachse verbundenen Rädern möglich ist. Des Weiteren soll ein Transportfahrzeug mit einem energieeffizienten Antrieb angegeben werden.

Erfindungsgemäß wird die voranstehende Aufgabe durch die Merkmale des Anspruches 1 gelöst. Danach ist ein Drehgestell für ein Transportfahrzeug, insbesondere für ein selbstangetriebenes Transportfahrzeug (SPMT), umfassend eine Schwerlastpendelachse mit einem Achskörper, wobei der Achskörper über ein Pendellager mit einer Längsschwinge koppelbar ist, wobei an einem ersten Ende des Achskörpers und an einem zweiten Ende des Achskörpers jeweils mindestens ein Rad anordenbar sind, dadurch gekennzeichnet, dass mindestens ein Elektromotor als direkter Antrieb für die Räder angeordnet ist.

In Bezug auf das Transportfahrzeug wird die zugrundeliegende Aufgabe durch die Merkmale von 15 gelöst. Damit ist ein Transportfahrzeug, insbesondere selbstangetriebenes Transportfahrzeug, beansprucht, mit mindestens einem Drehgestell nach einem der Ansprüche 1 bis 14.

In erfindungsgemäßer Weise ist zunächst erkannt worden, dass Verluste, die bei einer Energieübertragung durch Hydraulikleitungen insbesondere bei hohen Drehzahlen auftreten, reduziert werden können, indem eine direkte Umwandlung von elektrischer Energie in mechanische Energie erfolgt. Hierzu ist mindestens ein Elektromotor als direkter Antrieb für die Räder vorgesehen. Durch die direkte mechanische Kopplung von Elektromotor und Rädern kann somit das von dem Elektromotor bzw. den Elektromotoren erzeugte Drehmoment zum Antrieb genutzt werden, ohne dass die bei einem hydraulischen Antriebsstrang entstehenden energetischen Verluste auftreten. Ein direkter elektrischer Antrieb bietet zusätzlich die Möglichkeit Rekuperation, elektrisches Bremsen und/oder Torque-Vectoring (Drehmomentverteilung) zu realisieren. Ein weiterer Vorteil der erfindungsgemäßen Konstruktion besteht darin, dass alternative Energiespeicher wie Wasserstoff oder Batterien, die lediglich eine geringe volumetrische Energiedichte aufweisen, als Antrieb nutzbar gemacht werden. Neben den durch eine effiziente Elektrifizierung entstehenden ökologischen Vorteilen kann eine erfindungsgemäße Anordnung auch unproblematisch in Innenräumen, beispielsweise in einer Halle, betrieben werden.

Der Ausdruck "direkter Antrieb" ist im Rahmen dieser Offenbarung dahingehend zu verstehen, dass das von dem Elektromotor erzeugte Drehmoment mechanisch an das Rad bzw. die Räder übertragen wird, wobei ggf. Getriebe oder getriebeähnliche Elemente zwischengeordnet sein können. Wesentlich bei einem "direkten Antrieb" ist, dass keine Wandlung der mechanischen Energie, beispielsweise durch eine zwischen dem Elektromotor und dem anzutreibenden Rad angeordnete Hydraulikleitung, vorgesehen ist.

Bei dem Transportfahrzeug kann es sich insbesondere um ein beliebiges Schwerlastfahrzeug handeln, beispielsweise um ein selbstangetriebenes Transportfahrzeug (SPMT), einen Industriehubtransporter (IHT), einen Sektionshubtransporter (SHT) etc.

In vorteilhafter Weise kann es sich bei dem mindestens einen Elektromotor um einen permanenterregten Synchronmotor handeln. Ein permanenterregter Synchronmotor hat den Vorteil, dass dieser eine hohe Leistungsdichte aufweist. Der Synchronmotor kann einen axialen magnetischen Fluss oder einen radialen magnetischen Fluss aufweisen. Axialflussmotoren haben den Vorteil, dass sie eine geringe axiale Breite aufweisen und aufgrund der radial weiter außen angeordneten stromdurchflossenen Spulen einfach zu kühlen sind. Ein Radialflussmotor ist vorteilhaft, da dieser einfach in der Konstruktion ist und daher kostengünstig herstellbar ist.

In weiter vorteilhafter Weise kann es sich bei dem mindestens einen Elektromotor um einen Torquemotor handeln. Ein Torquemotor zeichnet sich durch sehr hohe Drehmomente bei geringen Drehzahlen aus und ist somit besonders gut als Antrieb bei hohen Lasten geeignet. Im Konkreten könnte es sich hierbei um einen Innenläufermotor handeln. Dieser könnte eine Polpaarzahl von 80 bis 95, insbesondere von 85 bis 90, vorzugsweise von 88, aufweisen.

Gemäß einer vorteilhaften Ausgestaltung kann ein gemeinsamer Elektromotor als Antrieb für die an dem ersten Ende und dem zweiten Ende des Achskörpers anordenbaren Räder vorgesehen sein. Durch die Nutzung eines gemeinsamen Motors kann dieser auf einfache Weise an dem Achskörper angeordnet werden. Im Konkreten ist es hierbei denkbar, dass der gemeinsame Elektromotor axial oder radial zum Achskörper angeordnet ist. Eine axiale Ausrichtung ermöglicht eine größere Bodenfreiheit, einen besseren Schutz des Elektromotors vor Vibrationen und Umwelteinflüssen sowie eine kompakte Bauweise. Eine radial Ausrichtung hat den Vorteil, dass eine einfache Wartung und ein einfacher Austausch ermöglicht wird. Des Weiteren ist eine axiale Ausrichtung aufgrund der fehlenden Hohlwelle im Elektromotor kostengünstig und entsteht auch keine Interferenz mit Pendelbolzen.

In vorteilhafter Weise kann dem gemeinsamen Elektromotor ein Differentialgetriebe nachgeordnet sein. Eine entsprechende Konstruktion ermöglicht es, die an dem ersten Ende und dem zweiten Ende des Achskörpers angeordneten Räder mit unterschiedlicher Drehzahl bei gleichen Drehmoment anzutreiben.

Des Weiteren ist es denkbar, dass an dem ersten Ende und dem zweiten Ende des Achskörpers jeweils ein Getriebe, vorzugsweise ein Planetengetriebe, vorgesehen ist. Die Anordnung eines Getriebes ermöglicht es, die für den Transport von schweren Lasten notwendigen hohen Drehmomente an den Rädern bereitzustellen.

In weiter vorteilhafter Weise kann jeweils ein separater Elektromotor an dem ersten Ende und dem zweiten Ende des Achskörpers angeordnet sein. Durch diese konstruktive Maßnahme können die an dem ersten Ende und dem zweiten Ende der Achse angeordneten Räder auf effiziente Weise, nämlich ohne Leitungsverluste angetrieben werden. Des Weiteren ist ein Torque-Vectoring einfach zu realisieren, nämlich durch eine entsprechende Ansteuerung jedes einzelnen Elektromotors. Zusätzlich kann jedem der separaten Elektromotoren vorteilhafterweise ein Getriebe nachgeordnet sein. Bei dem Getriebe kann es sich um ein Planetengetriebe handeln, so dass ein hohes Drehmoment auf das Rad bzw. die Räder übertragen werden kann.

Gemäß einer vorteilhaften Ausgestaltung können an dem ersten Ende und dem zweiten Ende des Achskörpers jeweils mindestens ein Rad, vorzugsweise Zwillingsräder, angeordnet sein. Alternativ oder zusätzlich kann eine Längsschwinge mit dem Achskörper über das Pendellager drehbar gekoppelt sein. Die Längsschwinge kann mit einem Lagerarm schwenkbar gekoppelt sein, so dass eine schwenkbare Lagerung der Schwerlastpendelachse bzw. des Achskörpers um eine horizontale Achse realisiert ist. Des Weiteren könnte der Lagerarm drehbar mit einem Fahrzeugrahmen koppelbar sein. Hierzu könnte ein Zahnkranz oder ein Zapfen bzw. eine Zapfenaufnahme an dem Lagerarm ausgebildet sein. Ein Zahnkranz hat den Vorteil, dass eine aktive Lenkung ermöglicht wird. Die Kopplung über einen Zapfen bzw. eine Zapfenaufnahme ist einfach zu realisieren und kann in vorteilhafter Weise genutzt werden, falls keine aktive Lenkung notwendig ist.

Zur Stromversorgung des mindestens einen Elektromotors kann in vorteilhafter Weise ein Wechselrichter angeordnet sein. Der Wechselrichter (Inverter) könnte an dem Drehgestell oder an dem Fahrzeugrahmen angeordnet sein. Des Weiteren ist es denkbar, dass der Wechselrichter als Teil einer Leistungssteuerung des Elektromotors ausgebildet ist.

In vorteilhafter Weise könnte eine Energieversorgungseinheit, die beispielsweise eine oder mehrere Batterien und/oder einer oder mehrerer Brennstoffzellen zur Stromversorgung der Elektromotoren aufweist, an dem Fahrzeug angeordnet und mit dem Elektromotor bzw. den Elektromotoren wirkverbunden sein. Alternativ ist es denkbar, dass die Energieversorgungseinheit auf einem separaten Fahrzeug angeordnet und mit dem Elektromotor bzw. den Elektromotoren wirkverbunden ist. Das Fahrzeug kann mit dem Transportfahrzeug koppelbar ausgebildet sein und von dem Transportfahrzeug geschleppt werden oder über einen eigenen Antrieb verfügen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel eines Drehgestells,
- Fig. 2: in einer geschnittenen Ansicht das Ausführungsbeispiel gemäß Fig. 1,
- Fig. 3: in einer perspektivischen Ansicht das Ausführungsbeispiel gemäß Fig. 1,
- Fig. 4: in einer schematischen Darstellung ein weiteres Ausführungsbeispiel eines Drehgestells,
- Fig. 5: in einer schematischen Darstellung ein weiteres Ausführungsbeispiel eines Drehgestells,
- Fig. 6: in einer geschnittenen Ansicht das Ausführungsbeispiel gemäß Fig. 5,
- Fig. 7: in einer perspektivischen Ansicht das Ausführungsbeispiel gemäß Fig. 5,
- Fig. 8: in einer schematischen Darstellung ein Ausführungsbeispiel eines Transportfahrzeugs, und
- Fig. 9: in einer schematischen Darstellung ein weiteres Ausführungsbeispiel eines Transportfahrzeugs.

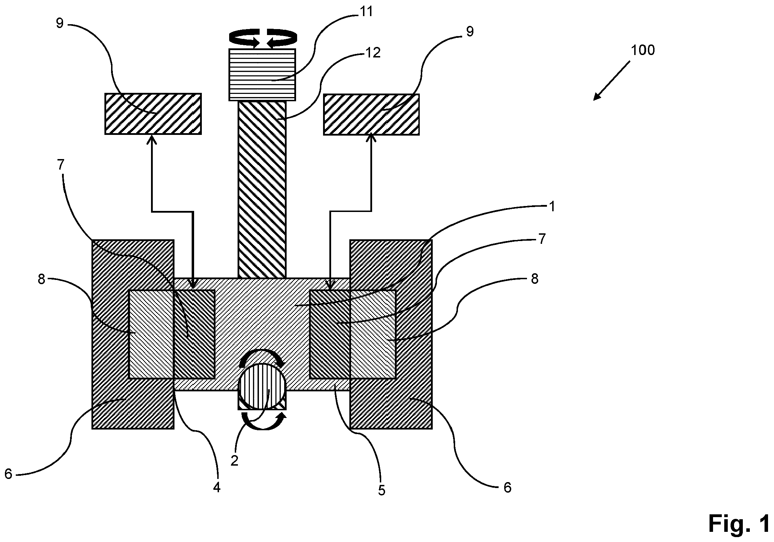

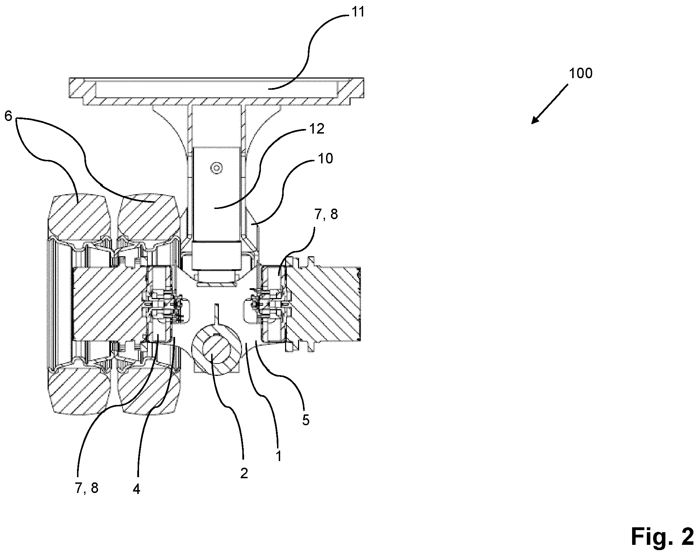

Die Fig. 1 bis 3 zeigen in unterschiedlichen schematischen Darstellungen ein erstes Ausführungsbeispiel eines Drehgestells 100 mit einer Schwerlastpendelachse. Die Schwerlastpendelachse weist einen Achskörper 1 auf, der über ein Pendellager 2 mit einer Längsschwinge 3 gekoppelt ist. Des Weiteren sind an dem ersten Ende 4 und dem zweiten Ende 5 des Achskörpers 1 jeweils Zwillingsräder 6 angeordnet, wobei auch lediglich jeweils ein einzelnes Rad an dem ersten Ende 4 und dem zweite Ende 5 des Achskörpers 1 vorgesehen sein kann.

Des Weiteren ist jeweils ein separater Elektromotor 7 an dem ersten Ende 4 und dem zweiten Ende 5 des Achskörpers zum Antrieb der Zwillingsräder 6 vorgesehen. Zwischen dem Elektromotor 7 und dem von diesem angetriebenen Zwillingsrädern 6 ist jeweils ein Getriebe 8, beispielsweise ein Planetengetriebe, angeordnet, um die zum Transport schwerer Lasten benötigten Drehmomente zu erreichen. Es ist jedoch auch denkbar, dass keine Getriebe 8 angeordnet sind. Die Elektromotoren 7 ermöglichen einen direkten Antrieb der Zwillingsräder 6, ohne das Verluste durch die Umwandlung von Energie auftreten, wie dies beispielsweise bei einem hydraulischen Antrieb der Fall ist.

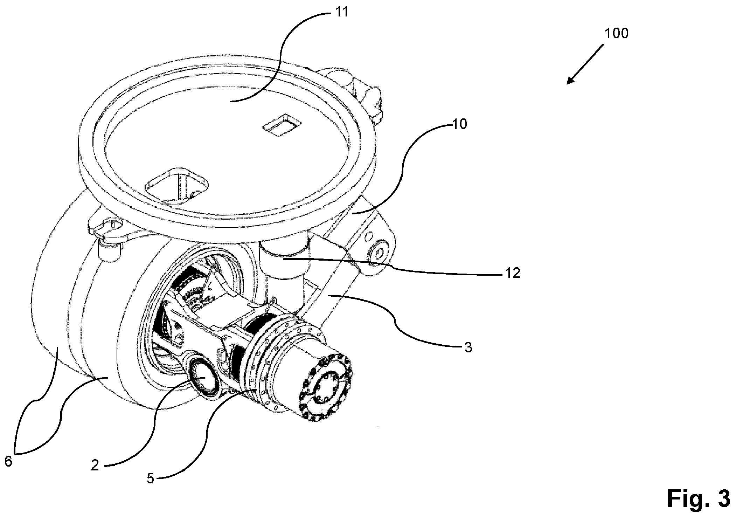

Weiterhin wird jeder der Elektromotoren 7 über einen nicht dargestellten Energiespeicher, beispielsweise eine Batterie oder eine Brennstoffzelle, und einen Wechselrichter 9 mit Strom versorgt. Der Wechselrichter 9 kann als Teil einer Leistungssteuerung ausgebildet sein. Insbesondere in Fig. 3 ist zu erkennen, dass die Längsschwinge 3 schwenkbar mit einem Lagerarm 10 gekoppelt ist. Der Lagerarm 10 kann über einen Zahnkranz 11 drehbar mit einem nicht dargestellten Fahrzeugrahmen gekoppelt werden. Sofern keine aktive Lenkung des Drehgestells 100 notwendig ist, kann ein Zapfen bzw. eine Zapfenaufnahme angeordnet sein, um das Drehgestell 100 mit einem Fahrzeugrahmend drehbar zu koppeln. Um die Längsschwinge 3 gegenüber dem Lagerarm 10 abzustützen ist ein Dämpfungsmittel 12, beispielsweise eine Zylinder-Kolben-Einrichtung, angeordnet.

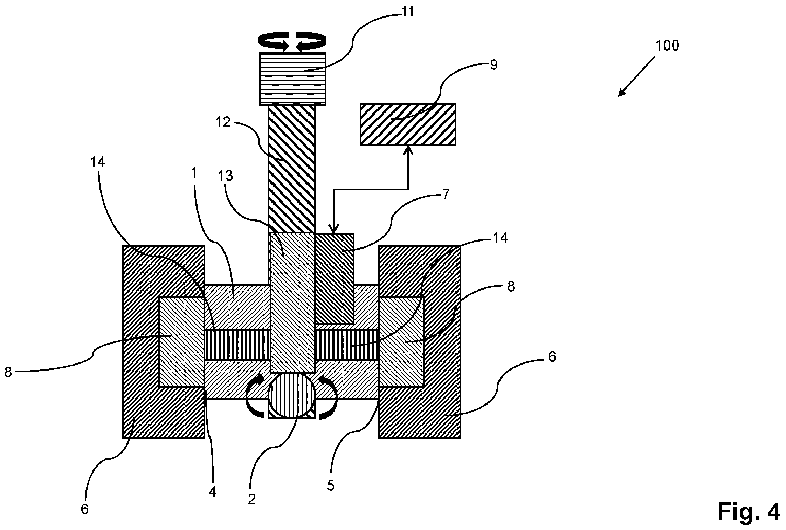

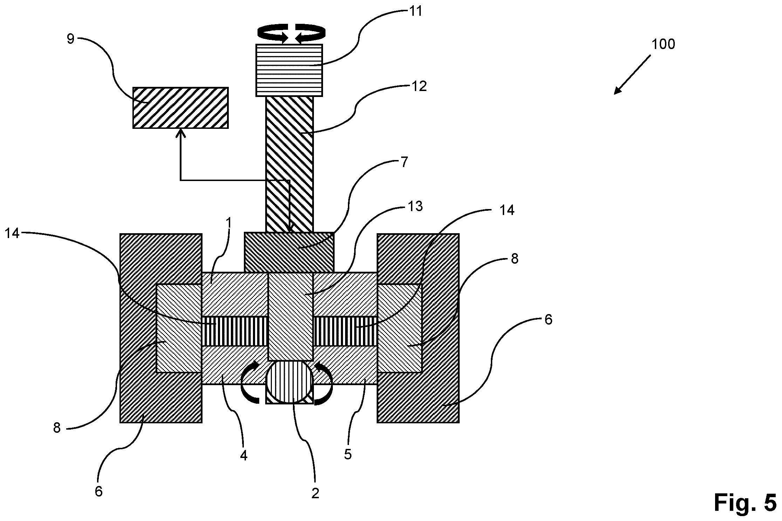

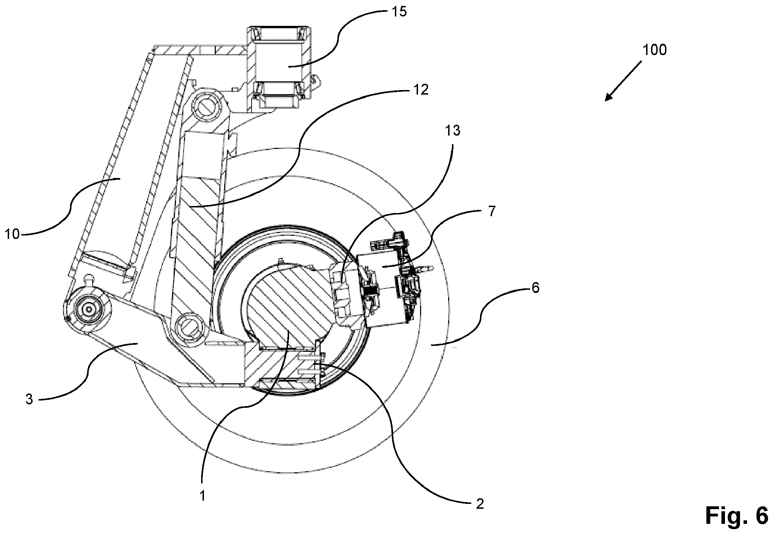

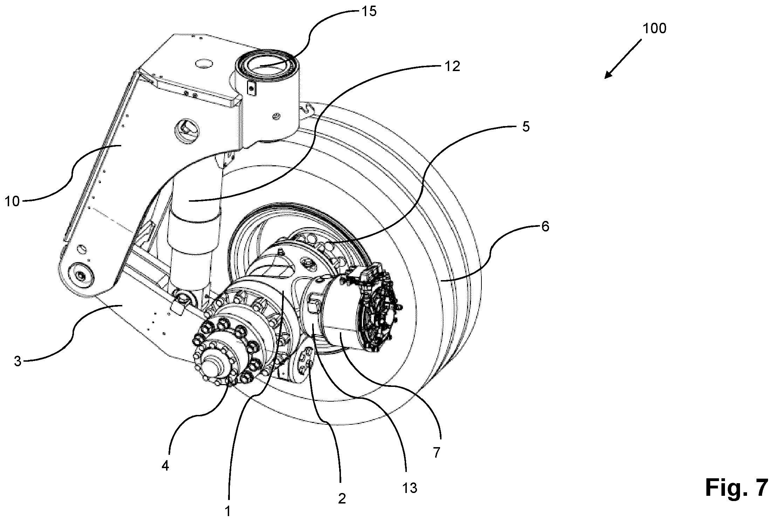

Die Figuren 4 und 5 bis 7 zeigen jeweils ein Ausführungsbeispiel eines Drehgestells 100, bei welchem ein gemeinsamer Elektromotor 7 zum Antrieb der an dem ersten Ende 4 des Achskörpers 1 und dem zweiten Ende 5 des Achskörpers 1 angeordneten Zwillingsräder 6 vorgesehen ist. Somit ist auch lediglich ein einzelner Wechselrichter 9 notwendig. Die Ausführungsbeispiele der Figuren 4 und 5 bis 7 unterscheiden sich voneinander lediglich darin, dass gemäß Fig. 4 der Elektromotor 7 axial zu dem Achskörper 1 ausgerichtet ist, wohingegen gemäß den Figuren 5 bis 7 der Elektromotor 7 radial zu dem Achskörper 1 ausgebildet ist. Des Weiteren ist in den Figuren 4 und 5 eine Zapfenaufnahme 15 anstatt eines Drehkranzes gemäß den Figuren 1 bis 3 angeordnet.

Weiterhin ist dem Elektromotor 7 ein Differentialgetriebe 13 nachgeordnet, das über einen Abtrieb 14 mit jeweils einem Getriebe 8, beispielsweise einem Planetengetriebe, gekoppelt ist, um das Drehmoment auf die Zwillingsräder 6 übertragen.

Im Übrigen entspricht die Konstruktion der Figuren 4 sowie 5 bis 7 dem Ausführungsbeispiel gemäß den Figuren 1 bis 3, so dass zur Vermeidung von Wiederholungen auf die voranstehende Beschreibung verwiesen wird.

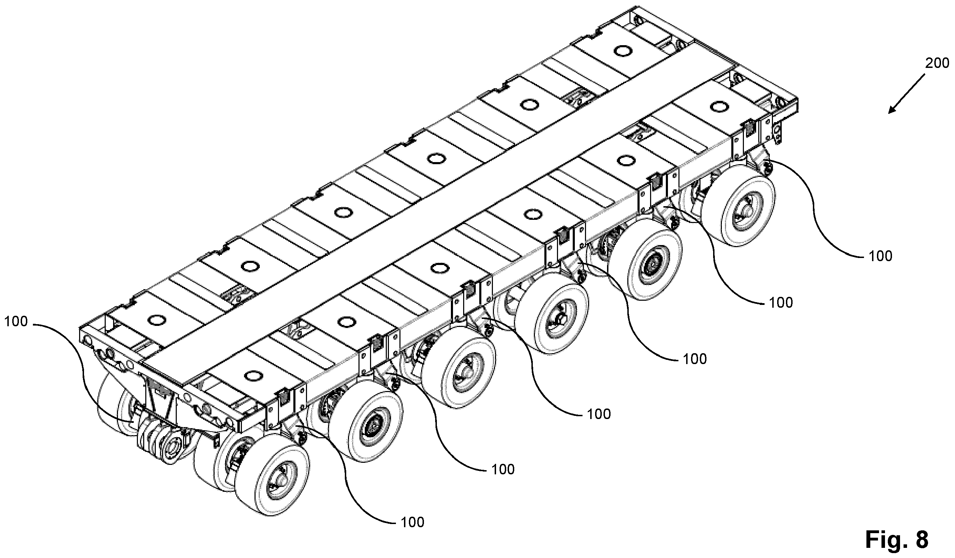

Fig. 8 zeigt ein Ausführungsbeispiel eines Transportfahrzeugs 200, wobei es sich um ein selbstangetriebenes Transportfahrzeug (sog. SPMT) handelt. Dieses weist mindestens ein erfindungsgemäßes Drehgestell 100 auf, insbesondere entsprechend der Anzahl der angetriebenen Schwerlastpendelachsen des Transportfahrzeugs (200).

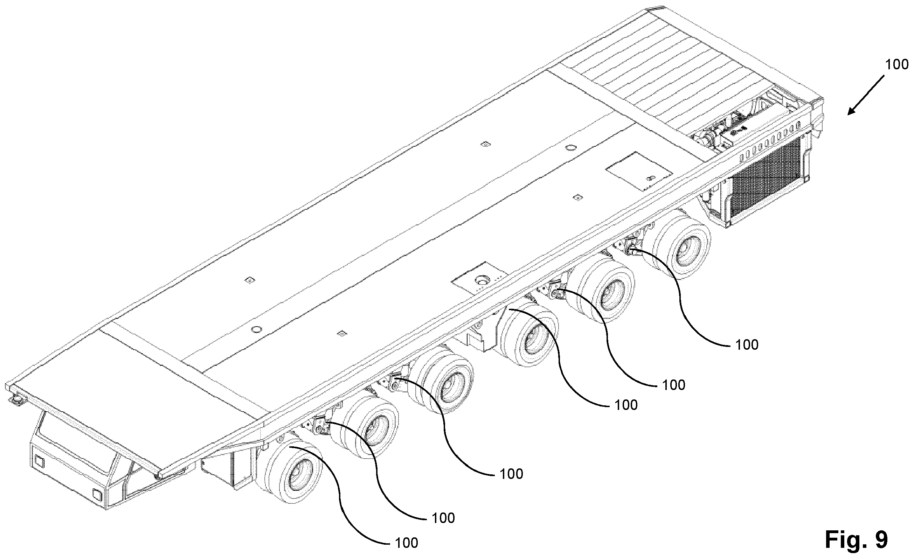

Fig. 9 zeigt ein Ausführungsbeispiel eines Transportfahrzeugs 200, wobei es sich um einen Industriehubtransport (sog. IHT) handelt. Dieses weist mindestens ein erfindungsgemäßes Drehgestell 100 auf, insbesondere entsprechend der Anzahl der angetriebenen Schwerlastpendelachsen des Transportfahrzeugs 200.

Es wird darauf hingewiesen, dass in den Fig. 8 und 9 jedes erkennbare Drehgestell 100 als erfindungsgemäßes Drehgestell 100 gekennzeichnet ist, wobei dies nicht zwangsweise der Fall sein muss, kann nämlich auch mindestens eine Schwerlastpendelachse eines Drehgestells eines erfindungsgemäßen Fahrzeugs 200 nicht angetrieben ausgebildet sein.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Achskörper
- 2: Pendellager
- 3: Längsschwinge
- 4: erste Ende
- 5: zweites Ende
- 6: Zwillingsräder
- 7: Elektromotor
- 8: Getriebe
- 9: Wechselrichter
- 10: Lagerarm
- 11: Zahnkranz
- 12: Dämpfungsmittel
- 13: Differentialgetriebe
- 14: Abtrieb
- 15: Zapfenaufnahme
- 100: Drehgestell
- 200: Transportfahrzeug

## Patentansprüche

1. Drehgestell (100) für ein Transportfahrzeug, insbesondere für ein selbstangetriebenes Transportfahrzeug (SPMT), umfassend eine Schwerlastpendelachse mit einem Achskörper (1), wobei der Achskörper (1) über ein Pendellager (2) mit einer Längsschwinge (3) koppelbar ist, wobei an einem ersten Ende (4) des Achskörpers (1) und an einem zweiten Ende (5) des Achskörpers (1) jeweils mindestens ein Rad (6) anordenbar sind,
**dadurch gekennzeichnet, dass** mindestens ein Elektromotor (7) als direkter Antrieb für die Räder angeordnet ist.

2. Drehgestell (100) nach Anspruch 1, **dadurch gekennzeichnet, dass** es sich bei dem mindestens einen Elektromotor (7) um einen permanenterregten Synchronmotor handelt, vorzugsweise mit axialem magnetischem Fluss oder mit radialem magnetischem Fluss.

3. Drehgestell (100) nach Anspruch 1 oder 2, **dadurch gekennzeichnet, dass** es sich bei dem mindestens einen Elektromotor (7) um einen Torquemotor handelt.

4. Drehgestell (100) nach einem der Ansprüche 1 bis 3, **dadurch gekennzeichnet, dass** ein gemeinsamer Elektromotor (7) als Antrieb für die an dem ersten Ende (4) und an dem zweiten Ende (5) des Achskörpers (1) anordenbaren Räder vorgesehen ist.

5. Drehgestell (100) nach Anspruch 4, **dadurch gekennzeichnet, dass** der gemeinsame Elektromotor (7) axial oder radial zum Achskörper (1) angeordnet ist.

6. Drehgestell (100) nach Anspruch 4 oder 5, **dadurch gekennzeichnet, dass** dem gemeinsamen Elektromotor (7) ein Differentialgetriebe (13) nachgeordnet ist.

7. Drehgestell (100) nach einem der Ansprüche 4 bis 6, **dadurch gekennzeichnet, dass** an dem ersten Ende (4) und dem zweiten Ende (5) des Achskörpers (1) jeweils ein Getriebe (8), vorzugsweise ein Planetengetriebe, vorgesehen ist.

8. Drehgestell (100) nach einem der Ansprüche 1 bis 3, **dadurch gekennzeichnet, dass** jeweils ein separater Elektromotor (7) an dem ersten Ende (5) und an dem zweiten Ende (5) des Achskörpers (1) angeordnet ist.

9. Drehgestell (100) nach Anspruch 8, **dadurch gekennzeichnet, dass** jedem der separaten Elektromotoren (7) ein Getriebe, vorzugsweise ein Planetengetriebe, nachgeordnet ist.

10. Drehgestell (100) nach einem der Ansprüche 1 bis 9, **dadurch gekennzeichnet, dass** an dem ersten Ende (4) und dem zweiten Ende (5) des Achskörpers (1) jeweils mindestens ein Rad (6), vorzugsweise Zwillingsräder, angeordnet ist.

11. Drehgestell (100) nach einem der Ansprüche 1 bis 10, **dadurch gekennzeichnet, dass** eine Längsschwinge (3) angeordnet ist, die mit dem Achskörper (1) über das Pendellager (2) drehbar gekoppelt ist.

12. Drehgestell (100) nach Anspruch 11, **dadurch gekennzeichnet, dass** ein Lagerarm (10) ausgebildet ist, mit dem die Längsschwinge (3) schwenkbar gekoppelt ist.

13. Drehgestell (100) nach Anspruch 12, **dadurch gekennzeichnet, dass** der Lagerarm (10) drehbar mit einem Fahrzeugrahmen koppelbar ist, beispielsweise über einen Zahnkranz (11) oder einen Zapfen bzw. eine Zapfenaufnahme (15).

14. Drehgestell (100) nach einem der Ansprüche 1 bis 13, **dadurch gekennzeichnet, dass** ein Wechselrichter (9) angeordnet ist.

15. Transportfahrzeug (200), insbesondere selbstangetriebenes Transportfahrzeug, mit mindestens einem Drehgestell (100) nach einem der Ansprüche 1 bis 14.
